(19) Europäisches Patentamt
European Patent Office
Office européen des brevets

(11) EP 4 726 476 A1

(12) EUROPEAN PATENT APPLICATION

(43) Date of publication:
**15.04.2026 Bulletin 2026/16**

(21) Application number: **25206923.2**

(22) Date of filing: **06.10.2025**

(51) International Patent Classification (IPC):
***G03G 15/02** (2006.01)* ***G03G 5/04** (2006.01)*

(52) Cooperative Patent Classification (CPC):
**G03G 15/0233; G03G 5/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.10.2024 JP 2024177497**

(71) Applicant: **KYOCERA Document Solutions Inc.**
**Osaka-shi, Osaka 540-8585 (JP)**

(72) Inventors:
- **OZAWA, Keiji**
**Osaka-shi, Osaka 540-8585 (JP)**
- **SHIMIZU, Tomofumi**
**Osaka-shi, Osaka 540-8585 (JP)**
- **TERAOKA, Katsunori**
**Osaka-shi, Osaka 540-8585 (JP)**
- **UEMURA, Teruyuki**
**Osaka-shi, Osaka 540-8585 (JP)**

(74) Representative: **Viering, Jentschura & Partner mbB**
**Patent- und Rechtsanwälte**
**Grillparzerstraße 14**
**81675 München (DE)**

# (54) IMAGE FORMING APPARATUS

(57) An image forming apparatus includes a photosensitive member (65), a charging roller (631) having a surface layer (636) with a volume resistivity of $1\times 10^8$ Ω·cm or more and $1 \times 10^{14}$ Ω·cm or less, the charging roller charging the photosensitive member (65), and a power supply (632) that applies a DC voltage to the charging roller (631). In the image forming apparatus, an inflow current to the photosensitive member (65) is 0.40 mC/$m^2$ or more and 1.0 mC/$m^2$ or less when the photosensitive member (65) is charged by the charging roller (631).

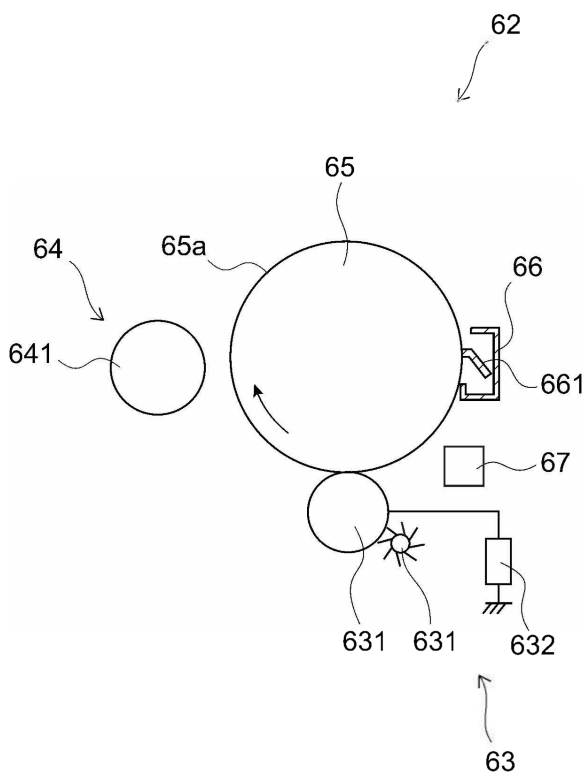


FIG.2



Processed by Luminess, 75001 PARIS (FR)

## Description

### Field

The present disclosure relates to an image forming apparatus using an electrophotographic method.

### Background

In an electrophotographic image forming apparatus, a drum-shaped photosensitive member is used as an image carrier, and after a surface of the photosensitive member is uniformly charged by a charging apparatus, light is irradiated onto the surface of the photosensitive member by an exposure apparatus, thereby forming an electrostatic latent image on the surface of the photosensitive member in which a charge in the light-irradiated areas is attenuated. The electrostatic latent image is then developed into a toner image by a developing apparatus, and the toner image is directly transferred to a recording medium by applying a transfer voltage of an opposite polarity to the toner on a transfer apparatus, or the toner image is primary transferred to an intermediate transfer medium and then secondary transferred to the recording medium, after which the toner image is thermally fixed to the recording medium by a fixing apparatus. Japanese Patent Application Publication No. 2022-181418 discloses a technology for improving charge stability and suppressing a transfer memory in a photosensitive member.

### Summary

An image forming apparatus according to an embodiment of the present disclosure includes a photosensitive member, a charging roller having a surface layer with a volume resistivity of $1 \times 10^8$ Ω·cm or more and $1 \times 10^{14}$ Ω·cm or less, the charging roller charging the photosensitive member, and a power supply that applies a DC voltage to the charging roller.

An inflow current to the photosensitive member is 0.40 mC/m$^2$ or more and 1.0 mC/m$^2$ or less the photosensitive member is charged by the charging roller.

The surface layer preferably has a configuration in which conductive particles are dispersed in a nylon resin.

The conductive particles preferably contain at least one of carbon black and tin oxide.

The photosensitive member is preferably a single-layer photosensitive member.

### Brief Description of Figures

Fig. 1 a schematic diagram of an image forming apparatus according to an embodiment of the present disclosure;
Fig. 2 is a schematic diagram of an image forming unit provided in the image forming apparatus;
Fig. 3 is a schematic diagram of a photosensitive member provided in the image forming apparatus; and
Fig. 4 is a schematic diagram of a charging roller provided in the image forming apparatus.

### Detailed Description

An image forming apparatus is provided with a charging roller for charging a photosensitive member. In the image forming apparatus, good charging properties are required to uniformly charge the photosensitive member to a certain high potential using the charging roller in order to form high-quality images. Additionally, the charging roller is required to have high wear resistance to withstand long-term use. In the image forming apparatus described in Japanese Patent Application Publication No. 2022-181418, both the charging properties of the photosensitive member and wear resistance of the charging roller are not achieved.

In view of the above circumstances, an object of the present disclosure is to achieve both the charging properties of the photosensitive member and the wear resistance of the charging roller in the image forming apparatus.

Embodiments of the present disclosure will be described.

[Overall configuration of image forming apparatus]

An image forming apparatus 100 according to an embodiment of the present disclosure will be described. Fig. 1 is a schematic diagram showing a configuration of the image forming apparatus 100. The image forming apparatus 100 is, for example, a tandem-type color printer.

As shown in Fig. 1, the image forming apparatus 100 includes a control section 10, an operation section 20, a

paper feed section 30, a transport section 40, a toner supply section 50, an image forming section 60, a transfer apparatus 70, a fixing apparatus 80, and an ejection section 90.

The control section 10 controls an operation of each part of the image forming apparatus 100. The control section 10 includes an arithmetic processing section and a memory section, which are not shown in Fig. 1. The arithmetic processing section is, for example, a CPU (Central Processing Unit), and the memory section is, for example, a semiconductor memory or an HDD (Hard Disk Drive). The arithmetic processing section controls the operation of the image forming apparatus 100 by executing a control program. The memory section stores the control program.

The operation section 20 receives an instruction from a user. When the operation section 20 receives the instruction from the user, it sends a signal indicating the instruction from the user to the control section 10. This initiates an image forming operation of the image forming apparatus 100.

The paper feed section 30 has a paper feed cassette 31 and a paper feed roller assembly 32. The paper feed cassette 31 can accommodate several sheets of recording medium P. The recording medium P is, for example, printing paper. The paper feed roller assembly 32 feeds the recording medium P accommodated in the paper feed cassette 31 one sheet at a time to the transport section 40.

The transport section 40 is equipped with rollers and guide members. The transport section 40 extends from the paper feed section 30 to the ejection section 90. The transport section 40 transports the recording medium P from the paper feed section 30 to the ejection section 90 via the image forming section 60 and the fixing apparatus 80.

The toner supply section 50 supplies toner to the image forming section 60. The toner supply section 50 includes a first mounting portion 51Y, a second mounting portion 51C, a third mounting portion 51M, and a fourth mounting portion 51K. The first mounting portion 51Y is equipped with a first toner container 52Y. The second mounting portion 51C is equipped with a second toner container 52C, the third mounting portion 51M is equipped with a third toner container 52M, and the fourth mounting portion 51K is equipped with a fourth toner container 52K.

The first toner container 52Y contains yellow toner, the second toner container 52C contains cyan toner, the third toner container 52M contains magenta toner, and the fourth toner container 52K contains black toner. Note that the colors of the toner are not limited to those shown here and may be other colors. The number of colors may also be one or more.

The image forming section 60 includes an exposure apparatus 61, a first image forming unit 62Y, a second image forming unit 62C, a third image forming unit 62M, and a fourth image forming unit 62K. Fig. 2 is a schematic diagram of an image forming unit 62. The first image forming unit 62Y, the second image forming unit 62C, the third image forming unit 62M, and the fourth image forming unit 62K have the configuration as the image forming unit 62 shown in Fig. 2. The image forming unit 62 includes a charging apparatus 63, a developing apparatus 64, a photosensitive member 65, a cleaning apparatus 66, and a static elimination apparatus 67. The charging apparatus 63, the developing apparatus 64, the cleaning apparatus 66, and the static elimination apparatus 67 are arranged along a surface 65a of the photosensitive member 65.

The exposure apparatus 61 (see Fig. 1) irradiates light (dashed lines in Fig. 1) onto the surface 65a of the photosensitive member 65 of each image forming unit 62 to expose the surface 65a. The exposure apparatus 61 irradiates light for each color to each image forming unit 62 based on supplied image data and performs exposure. The exposure apparatus 61 can perform the exposure using laser light.

The photosensitive member 65 forms the electrostatic latent image when exposed by the exposure apparatus 61. The surface 65a of the photosensitive member 65 is charged with a positive or negative charge in advance. When this surface 65a is exposed by the exposure apparatus 61, the charging is attenuated in an area where the light is irradiated, forming the electrostatic latent image. As the photosensitive member 65, an OPC (Organic Photo Conductor) may be used, for example. A detailed configuration of the photosensitive member 65 will be described later. The photosensitive member 65 rotates in the direction indicated by the arrow in Fig. 2 (clockwise direction).

The charging apparatus 63 charges the surface 65a positively or negatively. The charging apparatus 63 includes a charging roller 631, a charging voltage power supply 632, and a cleaning brush 633. The charging roller 631 contacts the surface 65a and uniformly charges the surface 65a. A detailed configuration of the charging roller 631 will be described later. The charging voltage power supply 632 applies a charging voltage to the charging roller. This charging voltage is preferably a direct current voltage. The cleaning brush 633 contacts the charging roller 631 and cleans the charging roller 631.

The developing apparatus 64 supplies the toner supplied from the toner supply section 50 to the surface 65a. The developing apparatus 64 includes a developing roller 641, as shown in Fig. 2. The toner supplied from the toner container is mixed with a magnetic carrier to form a two-component developing agent. At this time, the toner becomes charged to the same polarity as the surface 65a due to friction with the carrier.

The two-component developing agent is adsorbed onto the developing roller 641 by a magnetic force and transported to a position opposite the photosensitive member 65. A voltage is applied between the developing roller 641 and the photosensitive member 65, causing the toner in the two-component developing agent to adhere to the electrostatic latent image on the surface 65a. As a result, a toner image corresponding to the electrostatic latent image is formed on the surface 65a.

The developing apparatus 64 of the first image forming unit 62Y is connected to the first toner container 52Y, and the yellow toner is supplied. Therefore, a yellow toner image is formed on a surface of the photosensitive member 65 of the first image forming unit 62Y. Similarly, the developing apparatus 64 of the second image forming unit 62C is connected to the second toner container 52C, and a cyan toner image is formed on the surface of the photosensitive member 65 of the second image forming unit 62C.

Furthermore, the developing apparatus 64 of the third image forming unit 62M is connected to the third toner container 52M, and a magenta toner image is formed on the surface of the photosensitive member 65 of the third image forming unit 62M. The developing apparatus 64 of the fourth image forming unit 62K is connected to the fourth toner container 52K, and a black toner image is formed on the surface of the photosensitive member 65 of the fourth image forming unit 62K.

The cleaning apparatus 66 recovers the toner adhering to surface 65a after transfer by the primary transfer roller 71 described below. Specifically, the cleaning apparatus 66 presses a cleaning blade 661 against the surface 65a to recover the toner adhering to the surface 65a. The static elimination apparatus 67 irradiates the surface 65a with static elimination light to eliminate static charge on the surface 65a.

The transfer apparatus 70 (see Fig. 1) transfers the toner image from the photosensitive member 65 to the recording medium P, which is the transfer medium. Specifically, the transfer apparatus 70 transfers toner images of respective colors formed on the surface 65a of the photosensitive member 65 of each image forming unit 62 to the recording medium P in a superimposed fashion. The transfer apparatus 70 can transfer each toner image onto the recording medium P in a secondary transfer method (intermediate transfer method). As a configuration for the secondary transfer method, the transfer apparatus 70 includes four primary transfer rollers 71, an intermediate transfer belt 72, a drive roller 73, a follower roller 74, and a secondary transfer roller 75.

The intermediate transfer belt 72 is an endless belt stretched over the four primary transfer rollers 71, the drive roller 73, and the follower rollers 74. The intermediate transfer belt 72 is driven in response to rotation of the drive roller 73. In Fig. 1, the intermediate transfer belt 72 rotates in the direction indicated by the arrow in Fig. 1 (counterclockwise). The follower roller 74 is rotated in response to driving of the intermediate transfer belt 72.

Each image forming unit 62 is arranged opposite a lower surface of the intermediate transfer belt 72 in the order of the first image forming unit 62Y to the fourth image forming unit 62K from an upstream side to a downstream side of a driving direction of the lower surface of the intermediate transfer belt 72.

Each primary transfer roller 71 is arranged opposite each photosensitive member 65 via the intermediate transfer belt 72 and presses against each photosensitive member 65. Therefore, the toner image formed on the surface 65a of each photosensitive member 65 is sequentially transferred to the intermediate transfer belt 72 by each primary transfer roller 71. In the configuration of Fig. 1, the yellow toner image, the cyan toner image, the magenta toner image, and the black toner image are transferred to the intermediate transfer belt 72 in this order, but the order of the toner images is not limited to this. Hereinafter, a toner image layered by the yellow toner image, the cyan toner image, the magenta toner image, and the black toner image is referred to as a "layered toner image."

The secondary transfer roller 75 is arranged opposite the drive roller 73 via the intermediate transfer belt 72. The secondary transfer roller 75 is pressed against the drive roller 73. As a result, a transfer nip (contact area) is formed between the secondary transfer roller 75 and the drive roller 73, and when the recording medium P passes through the transfer nip, the layered toner image on the intermediate transfer belt 72 is transferred to the recording medium P by the secondary transfer roller 75. A layering order of the layered toner image on the recording medium P is opposite to that of the layered toner image on the intermediate transfer belt 72. The recording medium P with the transferred layered toner image is transported toward the fixing apparatus 80 by the transport section 40.

The fixing apparatus 80 fixes the layered toner image to the recording medium P. The fixing apparatus 80 includes a heating member 81 and a pressing member 82. The heating member 81 and the pressing member 82 are arranged opposite each other to form a fixing nip. The recording medium P transported from the image forming section 60 passes through the fixing nip, where it is heated to a predetermined fixing temperature while being pressurized, causing the layered toner image to be fixed to the recording medium P. The recording medium P is transported from the fixing apparatus 80 to the ejection section 90 by the transport section 40.

The ejection section 90 ejects the recording medium P with the layered toner image fixed. The ejection section 90 includes an ejection roller pair 91, an ejection port 92, and an ejection tray 93. The ejection roller pair 91 transports the recording medium P to the ejection tray 93 through the ejection port 92.

An image forming method using the image forming apparatus 100 will be described. When the control section 10 acquires the image data and the operation section 20 receives the instruction from the user to initiate the image forming operation, the photosensitive member 65 is rotated in each image forming unit 62, and the charging roller 631 uniformly charges the surface 65a.

Next, the exposure apparatus 61 exposes the surface 65a of each image forming unit 62 in accordance with the image data, thereby forming the electrostatic latent image of each color on the surface 65a. The developing apparatus 64 of each image forming unit supplies the toner of each color to the surface 65a, causing the toner to adhere electrostatically

to the electrostatic latent image of each color. As a result, the toner images of respective colors are formed on the surface 65a of each photosensitive member 65. If an amount of the toner filled in each developing apparatus 64 falls below a specified value, the toner is replenished from the first toner container 52Y to the fourth toner container 52K to each developing apparatus 64.

Between the primary transfer roller 71 and the photosensitive member 65, an electric field is applied at a predetermined transfer voltage by the primary transfer roller 71. As a result, the toner images of respective colors on the surface 65a are primary transferred to the intermediate transfer belt 72. The toner images of respective colors are layered, forming the layered toner image on the intermediate transfer belt 72. Subsequently, to prepare for formation of a new electrostatic latent image, any remaining toner on the surface 65a after the primary transfer is removed by the cleaning apparatus 66.

As the intermediate transfer belt 72 rotates counterclockwise in conjunction with the rotation of the drive roller 73, the recording medium P is transported by the transport section 40 to the transfer nip between the secondary transfer roller 75 and the drive roller 73 at a predetermined timing, and the layered toner image on the intermediate transfer belt 72 is secondary transferred to the recording medium P. The recording medium P on which the layered toner image is secondary transferred is transported to the fixing apparatus 80 by the transport section 40.

The recording medium P transported to the fixing apparatus 80 is heated and pressed by the heating member 81 and the pressing member 82, causing the layered toner image to be fixed to the surface of the recording medium P, thereby forming a color image on the recording medium P. The recording medium P with the color image formed is ejected to the ejection tray 93 at the ejection section 90.

The image forming apparatus 100 has the above configuration. The configuration of the image forming apparatus according to the present disclosure is not limited to the above, and may include the photosensitive member 65 and the charging roller 631 having the configuration described below. For example, the image forming apparatus 100 is configured to form the color image, but the image forming apparatus according to the present disclosure may also be an image forming apparatus capable of forming a monochrome image. In this case, the image forming apparatus may include only one image forming unit.

Additionally, the image forming apparatus 100 is configured as a tandem-type image forming apparatus, but the image forming apparatus according to the present disclosure may also be a rotary-type image forming apparatus. Furthermore, the image forming apparatus 100 is configured as a touchdown development-type image forming apparatus, but the image forming apparatus according to the present disclosure may also be an image forming apparatus using a development method other than the touchdown development method.

Furthermore, although the image forming apparatus 100 is an intermediate transfer type image forming apparatus, the image forming apparatus according to the present disclosure may be a direct transfer type image forming apparatus. In this case, the toner image is directly transferred from the photosensitive member 65 to the recording medium P while the photosensitive member 65 is in contact with the recording medium P. Furthermore, although each image forming unit 62 is provided with the static elimination apparatus 67, each image forming unit 62 may not be provided with the static elimination apparatus 67.

[Configuration of photosensitive member]

The configuration of the photosensitive member 65 described above will be described. Fig. 3 is a cross-sectional diagram of the surface of the photosensitive member 65. As shown in Fig. 3, the photosensitive member 65 includes a conductive base 651 and a photosensitive layer 652. The conductive base 651 is made of a conductive material such as aluminum and has a cylindrical shape. The photosensitive layer 652 is made of an organic photosensitive member and is formed as a thin film on the conductive base 651. Generally, the photosensitive member is classified into a "single-layer photosensitive member" including a single photosensitive layer, and a "multi-layer photosensitive member" including a plurality of photosensitive layers. Preferably, the photosensitive member 65 is the single-layer photosensitive member. Additionally, an undercoat layer may be provided between the conductive base 651 and the photosensitive layer 652.

In the photosensitive member 65, it is preferable that a film thickness of the photosensitive layer 652 is 20 μm or more and 40 μm or less. In the photosensitive member 65, by setting the film thickness of the photosensitive layer 652 to 20 μm or more, the inflow current to the photosensitive member 65 when the charging roller 631 charges the photosensitive member 65 becomes less likely to become excessive. In addition, in the photosensitive member 65, by setting the film thickness of the photosensitive layer 652 to 40 μm or less, the inflow current to the photosensitive member 65 during charging by the charging roller 631 is more easily ensured to be sufficient.

[Configuration of charging roller]

A configuration of the charging roller 631 described above will be described. Fig. 4 is a cross-sectional diagram of the charging roller 631. As shown in Fig. 4, the charging roller 631 includes a conductive shaft 634, an elastic layer 635, and

a surface layer 636.

The conductive shaft 634 is a rod-shaped member made of a conductive material. Examples of the conductive material include metals such as iron, aluminum, titanium, copper, and nickel; alloys such as stainless steel, duralumin, brass, and bronze; and composite materials made by bonding carbon black or carbon fibers with plastic. The conductive shaft 634 may have a cylindrical shape or a tubular shape.

The elastic layer 635 has both conductivity and elasticity and is arranged around the conductive shaft 634. A material for the elastic layer 635 may be a mixture of an elastic material and a conductive material. Examples of the elastic material include hydrin rubber, polyurethane elastomers, epichlorohydrin rubber, styrenebutadiene rubber (SBR), polynorbornene rubber, ethylenepropylene-diene rubber (EPDM), acrylonitrile-butadiene rubber (NBR), hydrogenated acrylonitrile-butadiene rubber (H-NBR), butadiene rubber (BR), isoprene rubber (IR), natural rubber (NR), and silicone rubber. Hydrin rubber is more suitable as the elastic material, and specifically, epichlorohydrin rubber is preferable.

The conductive material mixed with the elastic materials is at least one of an electronic conductive material and an ion conductive material. Examples of the electronic conductive material include carbon black, graphite, potassium titanate, iron oxide, titanium oxide, zinc oxide, and tin oxide. Tin oxide and carbon black are more suitable as the electronic conductive material. A content ratio of the electronic conductive material in the elastic layer 635 is preferably 5 mass parts or more and 40 mass parts or less per 100 mass parts of the elastic material.

Examples of the ion conductive material include organic salts (e.g., sodium trifluoroacetate), inorganic salts (e.g., quaternary ammonium salt), metal complexes, and ionic liquid. Sodium trifluoroacetate is more suitable as the ion conductive material. A content ratio of the ion conductive material in the elastic layer 635 is preferably 0.1 mass part or more and 2 mass parts or less per 100 mass parts of the elastic material.

The elastic layer 635 may further contain one or more additives such as a plasticizer, a filler, a vulcanizing agent, a vulcanizing accelerator, an aging inhibitor, a scorch inhibitor, a dispersant, and a release agent.

The surface layer 636 preferably has a configuration in which conductive particles are dispersed in a binder resin. As the binder resin, a polyamide resin may be used, with a nylon resin being more preferable. Specifically, as the nylon resin, a copolymer nylon resin "PA100-AS" (manufactured by T&K TOKA Co., Ltd.) may be used. A content ratio of the binder resin in the surface layer 636 is preferably 25 mass% or more and 60 mass% or less, and more preferably 35 mass% or more and 45 mass% or less. By setting the content ratio to 25 mass% or more, sufficient strength of the surface layer 636 can be ensured, and by setting of the content to 60 mass% or less, it becomes easier to ensure the amounts of the resin particles and the conductive particles in the surface layer 636.

The conductive particles impart appropriate conductivity to the surface layer. Examples of the conductive particle include carbon black, graphite, and metal oxide particles. Examples of the metal oxide include potassium titanate, iron oxide, titanium oxide, zinc oxide, tin oxide, antimony-doped tin oxide, and phosphorus-doped tin oxide. The conductive particles preferably contain at least one of carbon black and tin oxide.

The surface layer 636 may also have a configuration in which the resin particles are further dispersed in the binder resin. The resin particles impart an appropriate surface roughness to the surface layer 636. Example of the resin used to form the resin particles include a (meth)acrylic resin, a urethane resin, a silicone resin, a polyester resin, a polystyrene resin, a styrene-(meth)acrylic resin, and a polyolefin resin. The acrylic resin is more suitable, and specifically, "MZ-5HN" (crosslinked acrylic dispersed particles, manufactured by Soken Chemical Co., Ltd.) made from crosslinked polymethyl methacrylate can be used.

In the charging roller 631, it is preferable that a volume resistivity of the surface layer 636 is $1 \times 10^8$ $\Omega\cdot$cm or more and $1 \times 10^{14}$ $\Omega\cdot$cm or less. In the charging roller 631, by setting the volume resistivity of the surface layer 636 to $1 \times 10^8$ $\Omega\cdot$cm or more, it becomes easier to uniformly charge the photosensitive member 65 without unevenness. Additionally, in the charging roller 631, by setting the volume resistivity of the surface layer 636 to $1 \times 10^{14}$ $\Omega\cdot$cm or less, it becomes easier to ensure a sufficient charging potential for forming the image in the charging roller 631.

The volume resistivity of the surface layer 636 can be adjusted by varying a content of the conductive particles in the surface layer 636. Specifically, when using carbon black and tin oxide particles as the conductive particles, by setting a content of carbon black to 5 phr and a content of tin oxide particles to 40 phr or more and 100 phr or less, the volume resistivity of the surface layer 636 can be $1 \times 10^8$ $\Omega\cdot$cm or more and $1 \times 10^{14}$ $\Omega\cdot$cm or less. Note that "phr" denotes mass parts of carbon black or tin oxide particles to 100 mass parts of the elastic material.

In the image forming apparatus 100, the photosensitive member 65 and the charging roller 631 are configured such that the inflow current to the photosensitive member 65 when the charging roller 631 charges the photosensitive member 65 is 0.40 $mC/m^2$ or more and 1.0 $mC/m^2$ or less. By setting the inflow current to the photosensitive member 65 to 0.40 $mC/m^2$ or more, the photosensitive member 65 can be charged uniformly without unevenness. In addition, by setting the inflow current to the photosensitive member 65 to 1.0 $mC/m^2$ or less, high wear resistance can be easily achieved.

The inflow current to the photosensitive member 65 when the charging roller 631 charges the photosensitive member 65 can be adjusted, for example, by the film thickness of the photosensitive layer 652 of the photosensitive member 65 and the volume resistivity of the surface layer 636 of the charging roller 631.

[Method for manufacturing charging roller]

A method for manufacturing the charging roller 631 will be described. The charging roller 631 can be manufactured by forming the elastic layer 635 on the conductive shaft 634 and forming the surface layer 636 on the elastic layer 635. The elastic layer 635 can be formed by preparing a composition of the aforementioned elastic material and conductive material, heating this composition, injecting it into a mold with the conductive shaft 634 set in place, and then cooling and demolding. The mixing of the elastic material and the conductive material can be performed using a stirrer.

The surface layer 636 can be formed by preparing coating liquid by mixing a solvent, the aforementioned binder resin, the conductive particles, and the resin particles, applying the coating liquid to the elastic layer 635, and removing the solvent. The mixing of the materials can be performed using a wet dispersion machine such as a ball mill, a bead mill, or a roll mill.

The coating liquid can be applied using any method capable of uniformly coating the coating liquid, such as a dip coating method, a spray coating method, a spin coating method, a bar coating method, or a blade coating method. The solvent can be removed by heating, vacuuming, or a combination of heating and vacuuming, specifically using a high-temperature dryer or a vacuum dryer.

Examples

As Examples of the present disclosure and Comparative Examples, the photosensitive member and the charging roller were manufactured and evaluated. Note that the following Examples are merely illustrative examples of the present disclosure and the present disclosure is not limited to configurations of the following Examples.

[Manufacturing of photosensitive member]

The photosensitive member was manufactured as follows: First, the following materials were dispersed in a solvent using a rod-shaped ultrasonic vibrator to prepare the coating liquid. A dispersion time was set to 20 minutes. The materials were: 3 mass parts of Y-type titanyl phthalocyanine (YTP) as a charge-generating material shown in formula (1), 60 mass parts of a substance shown in formula (2) as a hole-transporting material, 50 mass parts of a substance shown in formula (3) as an electron-transporting material, and 100 mass parts of polyarylate resin as the binder resin. The solvent was 500 mass parts of tetrahydrofuran. The polyarylate resin included a repeating unit shown in formula (4) in an amount of 40 mass parts, a repeating unit shown in formula (5) in an amount of 10 mass parts, a repeating unit shown in formula (6) in an amount of 25 mass parts, and a repeating unit shown in formula (7) in an amount of 25 mass parts. The solvent was tetrahydrofuran in an amount of 500 mass parts.

[Chem. 1]

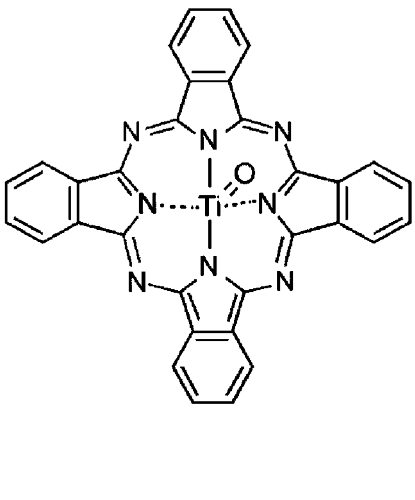

(1)

[Chem. 2]

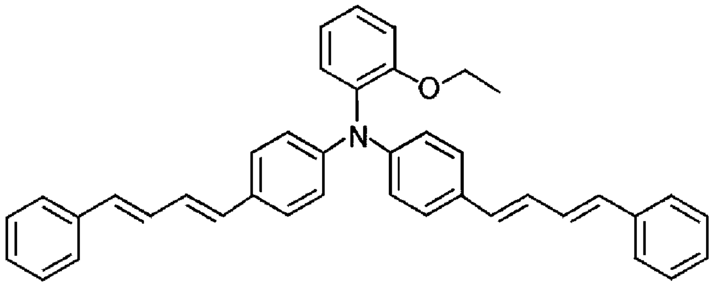

(2)

[Chem. 3]

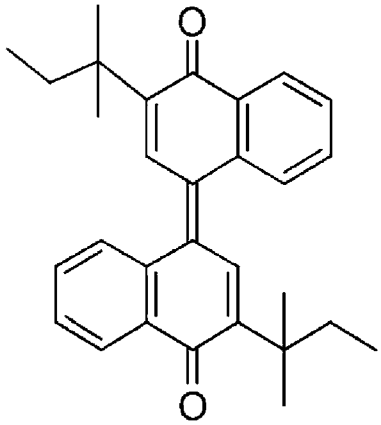

(3)

[Chem. 4]

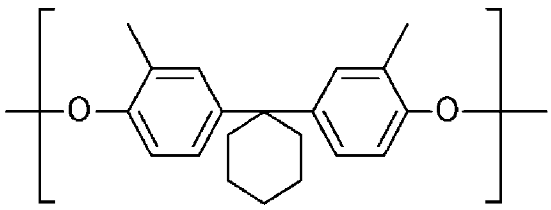

(4)

[Chem. 5]

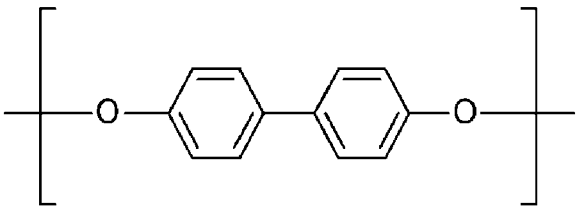

(5)

[Chem. 6]

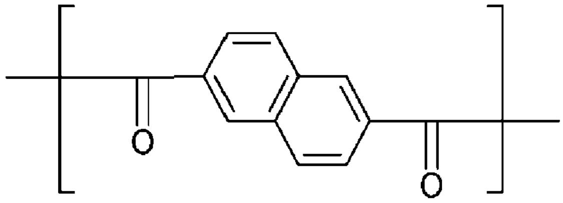

(6)

[Chem. 7]

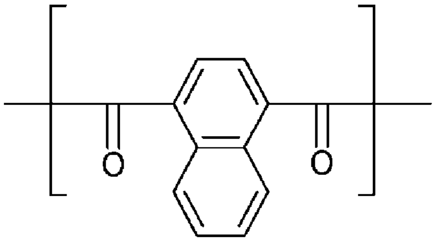

(7)

Next, the prepared coating liquid was filtered through a filter with a pore size of 5 μm. The coating liquid was then applied to a surface of the conductive base using the dip coating method to form a coating film. The coating film was dried at 120°C for 50 minutes to remove the solvent, thereby forming a photosensitive layer. A film thickness of the photosensitive layer varies depending on Examples and Comparative Examples. The photosensitive member was manufactured as described above.

[Manufacturing of charging roller]

The charging roller was manufactured as follows: First, the following materials were stirred and mixed using a stirrer to prepare a composition. The materials were: 100 mass parts of epichlorohydrin rubber ("Epichloromer CG-102" (manufactured by Osaka Soda Co., Ltd.)), 5 mass parts of a vulcanization aid (zinc oxide, "Zinc Oxide Type 2" (manufactured by Mitsui Metal Co., Ltd.)), 1.5 mass parts of a vulcanization accelerator (MBT (2-Mercaptobenzothiazole), "Nocceler M-P" (manufactured by Ouchi Shinsei Chemical Industry Co., Ltd.)), 1 mass parts of sulfur ("Sulfax PS" (manufactured by Tsurumi Chemical Industry Co., Ltd.), 50 mass parts of a filler (calcium carbonate, "Hakuenka CC" (manufactured by Shiraishi Industrial Co., Ltd.)), 20 mass parts of an electronic conductive material (carbon black, "Asahi #50" (manufactured by Asahi Carbon Co., Ltd.)), and 0.5 mass parts of ion conductive material (sodium trifluoroacetate).

A conductive shaft (diameter 6 mm) was set in a molding die, the above composition was injected into the molding die, heated at 160°C for 20 minutes, cooled, and demolded to form an elastic layer with a thickness of 1.8 mm around an outer circumference of the conductive shaft.

Next, the following materials were dispersed in a solvent using a ball mill to prepare the coating liquid. The materials were: as the binder resin, 100 mass parts of a copolymer nylon resin ("PA100-AS" (manufactured by T&K TOKA Co., Ltd.)); as the resin particles, 50 mass parts of acrylic particles in the form of cross-linked acrylic particles dispersed in a solvent ("MZ-5HN" (manufactured by Soken Chemical Co., Ltd.)), and as the conductive particles, 5 mass parts of tin oxide particles ("SP2" (manufactured by Mitsubishi Materials Corporation)) and carbon black (manufactured by Tokai Carbon Co., Ltd.). A content of tin oxide particles varies depending on Examples and Comparative Examples. The solvent used was 1-butanol.

Next, the coating liquid prepared above was applied to an outer periphery of the elastic layer using a blade coating method to form a coating film with a thickness of 10 μm. The coating film was then dried in an electric furnace at 120°C for 40 minutes to remove the solvent, thereby forming the surface layer. The charging roller was manufactured as described above.

[Measurement and evaluation]

In Examples and Comparative Examples, measurements of the inflow current for the photosensitive member and the volume resistivity of the surface layer for the charging roller were performed. Additionally, in Examples and Comparative Examples, evaluations of charging properties, image uniformity, and wear resistance were conducted for the

photosensitive member and the charging roller.

• Method for measuring inflow current

Using an evaluation machine of the image forming apparatus ("TASKalf MA4500ci" manufactured by Kyocera Document Solutions Co., Ltd.), the current flowing into the photosensitive member was measured when the photosensitive member was charged to $V_0$ (initial surface potential): 470V. The current was measured using a microampere meter "MA-100N" (manufactured by Nalica Co., Ltd.) .

• Method for measuring surface volume resistivity

The coating liquid from the charging roller was applied to an aluminum sheet to manufacture a thin-film sample for a volume resistivity measurement. A high-resistance meter ("Hyresta-UX MCP-HT800" manufactured by Mitsubishi Chemical Analytic Co., Ltd.) was used to apply an electrode probe to the coated thin film sample, apply a voltage of 100V for 10 seconds, and measure the volume resistivity.

• Method for evaluating charging properties

The photosensitive member and the charging roller were set to the evaluation machine ("TASKalf MA4500ci" manufactured by Kyocera Document Solutions Co., Ltd.), and a charging potential was measured at room temperature with applied voltages set to 1100V, 1200V, 1300V, 1400V, and 1500V. The charging properties were evaluated based on the charging potential. The evaluation values were assessed according to the following criteria A and B. The photosensitive member and the charging roller with an evaluation of A are passed, while those with an evaluation of B are failed.

A: Over 50V
B: 50V or less

• Image unevenness

The photosensitive member and the charging roller were set in the evaluation machine ("TASKalf MA4500ci" manufactured by Kyocera Document Solutions Co., Ltd.), and under conditions of 23.2°C and 52% R.H., the applied voltage was set to 1100V, 1200V, 1300V, 1400V, and 1500V, and performed formation of a 25% half image at each applied voltage. Each 25% half image was visually inspected and evaluated according to the following criteria A and B. The photosensitive member and the charging roller evaluated as A are passed, and those evaluated as B are failed.

A: No image unevenness observed
B: Image unevenness is observed in some areas
C: Image unevenness is observed throughout the entire image

•Abrasion resistance

The photosensitive member and the charging roller were set in the evaluation machine ("TASKalf MA4500ci" manufactured by Kyocera Document Solutions Co., Ltd.) and image formation was performed under conditions of 23.2°C and 52% R.H. The print pattern was a 5% concentration text image, the print method was continuous printing, the number of prints was 50,000 sheets, and paper for evaluation was "Askul MultiPaper Super Economy+." A charging polarity of the charging roller was positive, an applied voltage was DC voltage, and a transfer method was an intermediate transfer method. A surface film thickness T1 of the charging roller before printing 50,000 sheets and a surface film thickness T2 of the charging roller after printing 50,000 sheets were measured using an eddy current film thickness gauge ("LH-373" manufactured by Ketsuto Scientific Research Institute Co., Ltd.), and an amount of wear per 1,000 sheets was calculated.

Amount of wear ($\mu$m/1,000 sheets) - (1,000/50,000) $\times$ (T1 - T2)

The wear resistance of the surface layer of the charging roller was evaluated based on the amount of wear. The evaluation was performed according to the following criteria A and B. With respect to the wear resistance of the surface layer of the charging roller, the photosensitive member and the charging roller evaluated as A are passed, and an evaluation of B is failed.

A: Less than 0.12 μm/1,000 sheets
B: 0.12 μm/1,000 sheets or more

[Examples 1 to 9]

In each of Examples 1 to 9, the film thickness of the photosensitive layer of the photosensitive member and the amount of tin oxide on the surface layer of the charging roller were varied. Table 1 shows the film thickness of the photosensitive layer and the inflow current of the photosensitive member, as well as the amount of tin oxide and the volume resistivity of the surface layer of the charging roller in each of Examples 1 to 9. Note that the volume resistivity is shown in logarithmic form. As shown in Table 1, in Examples 1 to 9, the inflow current is within the range of 0.40 $mC/m^2$ or more and 1.0 $mC/m^2$ or less, and the volume resistivity of the surface layer of the charging roller is within the range of $1 \times 10^8$ Ω·cm or more and $1 \times 10^{14}$ Ω·cm or less.

[Table 1]

| Example | Photosensitive member | | Charging roller | |
|---|---|---|---|---|
| | Film thickness of photosensitive layer (μm) | Inflow current ($MC/m^2$) | Amount of tin oxide (phr) | Volume resistivity (logΩm) |
| 1 | 40 | 0.40 | 100 | 8.0 |
| 2 | 40 | 0.40 | 85 | 11.5 |
| 3 | 40 | 0.40 | 40 | 14.0 |
| 4 | 28 | 0.74 | 100 | 8.0 |
| 5 | 28 | 0.74 | 85 | 11.5 |
| 6 | 28 | 0.74 | 40 | 14.0 |
| 7 | 20 | 1.00 | 100 | 8.0 |
| 8 | 20 | 1.00 | 85 | 11.5 |
| 9 | 20 | 1.00 | 40 | 14.0 |

Table 2 shows evaluation results of the charging properties of the photosensitive member and charging roller in each of Examples 1 to 9. The photosensitive member and the charging roller in each of Examples 1 to 9 passed for the charging properties.

[Table 2]

| Example | Charging properties | | | | | | | | | |
|---|---|---|---|---|---|---|---|---|---|---|
| | 1100V | | 1200V | | 1300V | | 1400V | | 1500V | |
| | Evaluation value (V) | Evaluation | Evaluation value (V) | Evaluation | Evaluation value (V) | Evaluation | Evaluation value (V) | Evaluation | Evaluation value (V) | Evaluation |
| 1 | 315 | A | 395 | A | 476 | A | 554 | A | 639 | A |
| 2 | 303 | A | 386 | A | 467 | A | 552 | A | 635 | A |
| 3 | 302 | A | 377 | A | 455 | A | 541 | A | 622 | A |
| 4 | 379 | A | 461 | A | 548 | A | 631 | A | 716 | A |
| 5 | 348 | A | 432 | A | 512 | A | 594 | A | 679 | A |
| 6 | 317 | A | 400 | A | 483 | A | 572 | A | 653 | A |
| 7 | 465 | A | 548 | A | 631 | A | 714 | A | 798 | A |
| 8 | 458 | A | 540 | A | 621 | A | 706 | A | 789 | A |
| 9 | 445 | A | 531 | A | 615 | A | 699 | A | 785 | A |

Table 3 shows evaluation results for the image uniformity of the photosensitive member and the charging roller in each of Examples 1 to 9. The photosensitive member and charging roller in each of Examples 1 to 9 passed for the image uniformity.

[Table 3]

| Example | Image uniformity | | | | |
|---|---|---|---|---|---|
| | 1100V | 1200V | 1300V | 1400V | 1500V |
| 1 | A | A | A | A | A |
| 2 | A | A | A | A | A |
| 3 | A | A | A | A | A |
| 4 | A | A | A | A | A |
| 5 | A | A | A | A | A |
| 6 | A | A | A | A | A |
| 7 | A | A | A | A | A |
| 8 | A | A | A | A | A |
| 9 | A | A | A | A | A |

Table 4 shows evaluation results of the wear resistance of the surface layer of the charging roller in each of Examples 1 to 9. The surface layer of the charging roller in each of Examples 1 to 9 passed for the wear resistance.

[Table 4]

| Example | Abrasion resistance | |
|---|---|---|
| | Evaluation value (μm/1000 pieces) | Evaluation |
| 1 | 0.041 | A |
| 2 | 0.042 | A |
| 3 | 0.040 | A |
| 4 | 0.087 | A |
| 5 | 0.088 | A |
| 6 | 0.088 | A |
| 7 | 0.108 | A |
| 8 | 0.110 | A |
| 9 | 0.111 | A |

[Comparative Examples 1 to 5]

In each of Comparative Examples 1 to 5, the film thickness of the photosensitive layer of the photosensitive member and the amount of tin oxide on the surface layer of the charging roller were varied. Table 5 shows the film thickness and the inflow current of the photosensitive layer of the photosensitive member, the amount of tin oxide and the volume resistivity of the surface layer of the charging roller in each of Comparative Examples 1 to 5. Note that the volume resistivity is shown in logarithmic form. Comparative Example 1 differs from Examples in that the inflow current of the photosensitive member is greater than 1.0 $mC/m^2$. Comparative Example 2 differs from Examples in that the inflow current of the photosensitive member is less than 0.40 $mC/m^2$. Comparative Example 3 differs from Examples in that the volume resistivity of the surface layer of the charging roller is less than $1 \times 10^8$ Ω·cm. Comparative Examples 4 and 5 differ from Examples in that the volume resistivity of the surface layer of the charging roller is greater than $1 \times 10^{14}$ Ω·cm.

[Table 5]

| Comparative Example | Photosensitive member | | Charging roller | |
|---|---|---|---|---|
| | Film thickness of photosensitive layer (μm) | Inflow current ($mC/m^2$) | Amount of tin oxide (phr) | Volume resistivity (logΩm) |
| 1 | 18 | 1.15 | 85 | 11.5 |
| 2 | 42 | 0.30 | 85 | 11.5 |
| 3 | 28 | 0.74 | 200 | 6.0 |
| 4 | 28 | 0.74 | 20 | 15.0 |
| 5 | 28 | 0.74 | 0 | 16.0 |

Table 6 shows evaluation results of the charging properties of the photosensitive member and the charging roller in each of Comparative Examples 1 to 5. The photosensitive member and the charging roller in each of Comparative Examples 4 and 5 failed for the charging properties. It is considered to be due to the excessive volume resistivity of the surface layer of the charging roller in each of Comparative Examples 4 and 5.

[Table 6]

| Comparative Example | Charging properties | | | | | | | | | |
|---|---|---|---|---|---|---|---|---|---|---|
| | 1100V | | 1200V | | 1300V | | 1400V | | 1500V | |
| | Evaluation value (V) | Evaluation | Evaluation value (V) | Evaluation | Evaluation value (V) | Evaluation | Evaluation value (V) | Evaluation | Evaluation value (V) | Evaluation |
| 1 | 485 | A | 568 | A | 651 | A | 734 | A | 818 | A |
| 2 | 285 | A | 367 | A | 448 | A | 533 | A | 616 | A |
| 3 | 399 | A | 485 | A | 569 | A | 653 | A | 739 | A |
| 4 | 11.8 | B | 12.1 | B | 14.9 | B | 17.9 | B | 24.9 | B |
| 5 | 2.4 | B | 3.4 | B | 4.7 | B | 6.8 | B | 10.2 | B |

Table 7 shows evaluation results of the image uniformity for the photosensitive member and the charging roller in each of Comparative Examples 1 to 5. The photosensitive member and the charging roller in each of Comparative Examples 2 and 3 failed for the image uniformity at applied voltages of 1200V, 1300V, 1400V, and 1500V. It is considered to be due to the fact that the inflow current of the photosensitive member was too low in Comparative Example 2, and the volume resistivity of the surface layer of the charging roller was too low in Comparative Example 3. Note that the photosensitive member and the charging roller in each of Comparative Examples 4 and 5 were unable to form the 25% half image, making it impossible to evaluate the image uniformity. It is believed to be due to the fact that the volume resistivity of the surface layer of the charging roller was too high in each of Comparative Examples 4 and 5.

[Table 7]

| Comparative Example | Image uniformity | | | | |
|---|---|---|---|---|---|
| | 1100V | 1200V | 1300V | 1400V | 1500V |
| 1 | A | A | A | A | A |
| 2 | A | B | C | C | C |
| 3 | A | B | C | C | C |
| 4 | - | - | - | - | - |
| 5 | - | - | - | - | - |

Table 8 shows evaluation results of the surface layer wear resistance of the charging roller in each of Comparative Examples 1 to 5. In Comparative Example 1, the wear resistance of the surface layer of the charging roller failed. It is believed to be due to the excessive inflow current of the photosensitive member in Comparative Example 1. Note that in each of Comparative Examples 4 and 5, the photosensitive member and the charging roller were unable to form the image, making it impossible to evaluate the wear resistance of the surface layer of the charging roller. It is believed to be due to the excessively high volume resistivity of the surface layer of the charging roller in each of Comparative Examples 4 and 5.

[Table 8]

| Comparative Example | Abrasion resistance | |
|---|---|---|
| | Evaluation value (μm/1000 pieces) | Evaluation |
| 1 | 0.128 | B |
| 2 | 0.039 | A |
| 3 | 0.087 | A |
| 4 | - | - |
| 5 | - | - |

It should be understood by those skilled in the art that various modifications, combinations, subcombinations and alterations may occur depending on design requirements and other factors insofar as they are within the scope of the appended claims or the equivalents thereof.

## Claims

**1.** An image forming apparatus, comprising:

a photosensitive member (65);
a charging roller (631) having a surface layer (636) with a volume resistivity of $1\times 10^8\ \Omega\cdot cm$ or more and $1\times 10^{14}\ \Omega\cdot cm$ or less, the charging roller charging the photosensitive member (65); and
a power supply (632) that applies a DC voltage to the charging roller (631), wherein
an inflow current to the photosensitive member (65) is 0.40 $mC/m^2$ or more and 1.0 $mC/m^2$ or less when the photosensitive member (65) is charged by the charging roller (631).

**2.** The image forming apparatus according to claim 1, wherein the surface layer (636) has a configuration in which

conductive particles are dispersed in a nylon resin.

3. The image forming apparatus according to claim 2, wherein the conductive particles contain at least one of carbon black and tin oxide.

4. The image forming apparatus according to any one of claims 1 to 3, wherein the photosensitive member (65) is a single-layer photosensitive member.

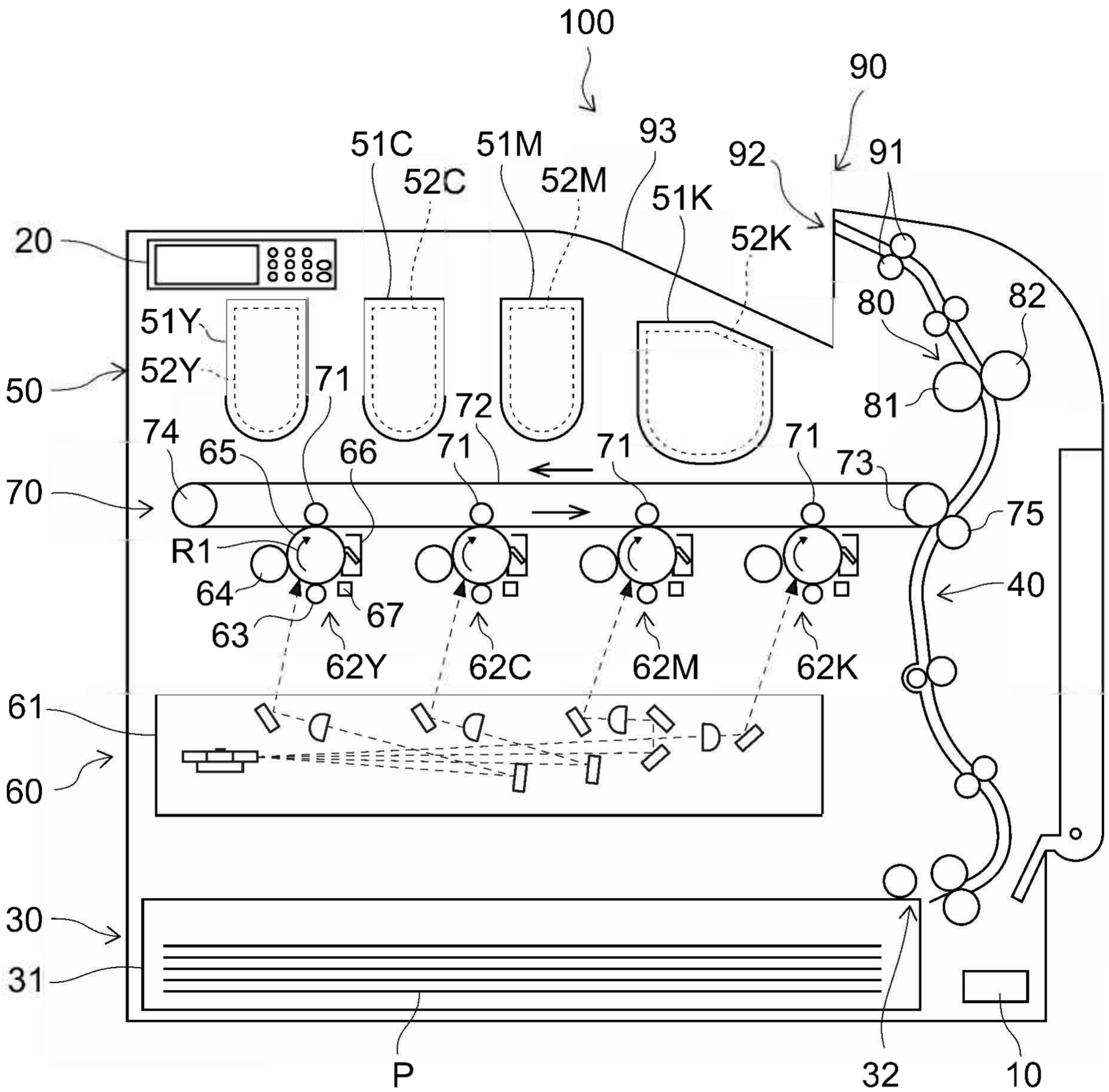
100
90
93
92
91
51C
51M
52C
52M
51K
52K
20
80
82
51Y
52Y
71
72
81
50
74
65
66
71
71
71
73
70
75
R1
40
64
67
63
62Y
62C
62M
62K
61
60
30
31
P
32
10

FIG.1

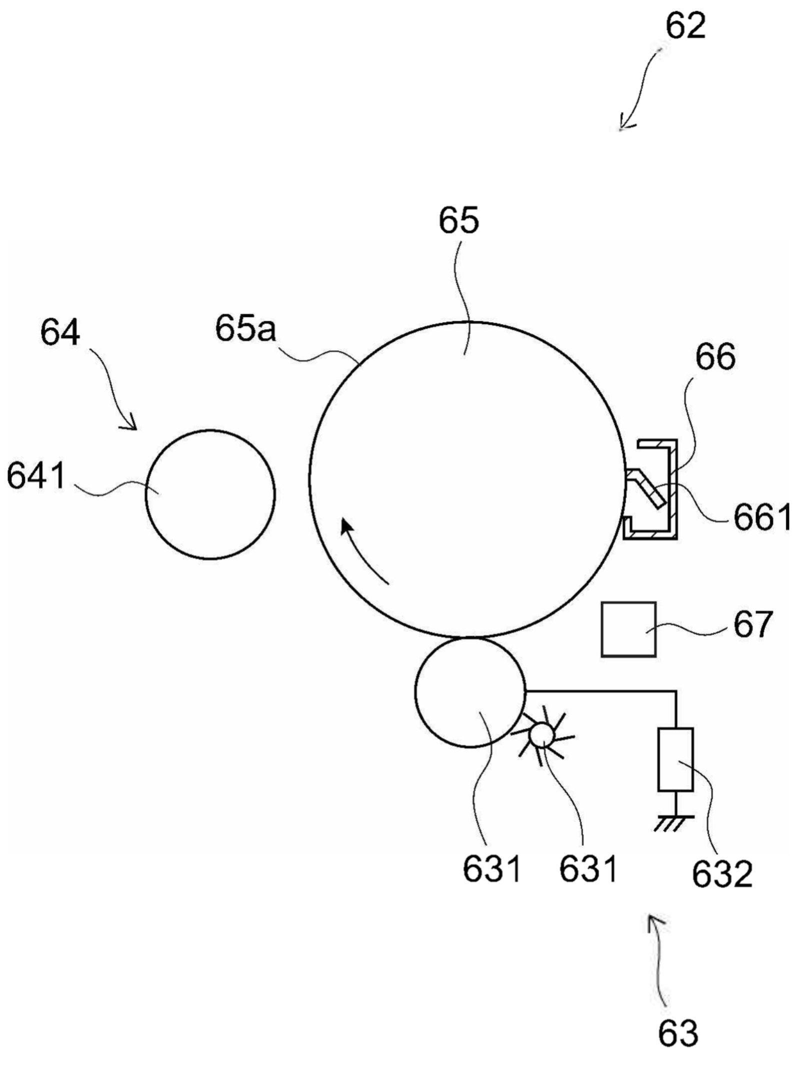


FIG.2

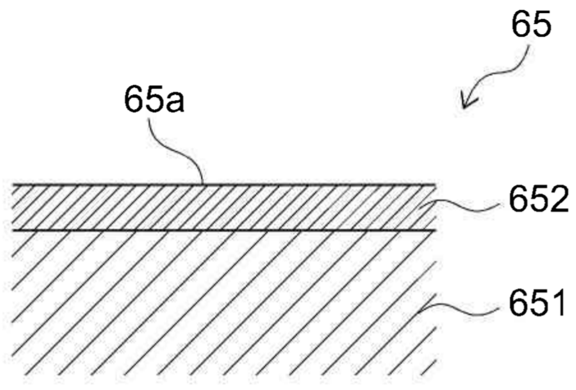


FIG.3

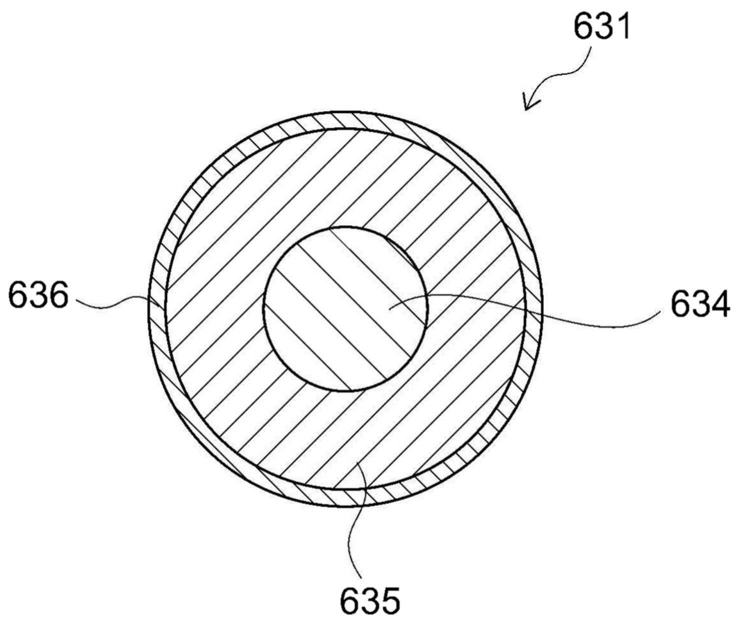


FIG.4

Europäisches Patentamt
European Patent Office
Office européen des brevets

# EUROPEAN SEARCH REPORT

Application Number
EP 25 20 6923

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2021 021899 A (KYOCERA DOCUMENT SOLUTIONS INC) 18 February 2021 (2021-02-18) * the whole document * ----- | 1-4 | INV. G03G15/02 G03G5/04 |
| X | US 11 320 760 B2 (KYOCERA DOCUMENT SOLUTIONS INC [JP]) 3 May 2022 (2022-05-03) * column 30 - column 45; figures 1-7 * ----- | 1-4 | |

TECHNICAL FIELDS SEARCHED (IPC)
G03G

The present search report has been drawn up for all claims

| Place of search | Date of completion of the search | Examiner |
|---|---|---|
| Munich | 6 March 2026 | Rubio Sierra, F |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 20 6923

This annex lists the patent family members relating to the patent documents cited in the above-mentioned European search report. The members are as contained in the European Patent Office EDP file on
The European Patent Office is in no way liable for these particulars which are merely given for the purpose of information.

06-03-2026

| Patent document cited in search report | | Publication date | Patent family member(s) | | | Publication date |
|---|---|---|---|---|---|---|
| JP 2021021899 | A | 18-02-2021 | NONE | | | |
| US 11320760 | B2 | 03-05-2022 | JP | 2021021752 | A | 18-02-2021 |
| | | | US | 2021026269 | A1 | 28-01-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022181418 A